**Europäisches Patentamt**

**European Patent Office**

**Office européen des brevets**

(11) Publication number : **0 519 589 A2**

## (12) EUROPEAN PATENT APPLICATION

(21) Application number : **92303610.7**

(22) Date of filing : **22.04.92**

(51) Int. Cl.⁵ : **H04N 5/06, H04N 5/21**

(30) Priority : **23.04.91 GB 9108699**

(43) Date of publication of application :
**23.12.92 Bulletin 92/52**

(84) Designated Contracting States :
**DE FR NL**

(71) Applicant : **EEV LIMITED**
**106 Waterhouse Lane**
**Chelmsford, Essex, CM1 2QU (GB)**

(72) Inventor : **Hadfield, Kevin Anthony Derek**
**11 Barkis Close, Newlands Spring**
**Chelmsford, Essex CM1 4UW (GB)**

(74) Representative : **Cockayne, Gillian et al**
**GEC Patent Department, GEC Marconi**
**Limited, West Hanningfield Road**
**Great Baddow, Chelmsford Essex CM2 8HN**
**(GB)**

(54) **Pulse generating circuits.**

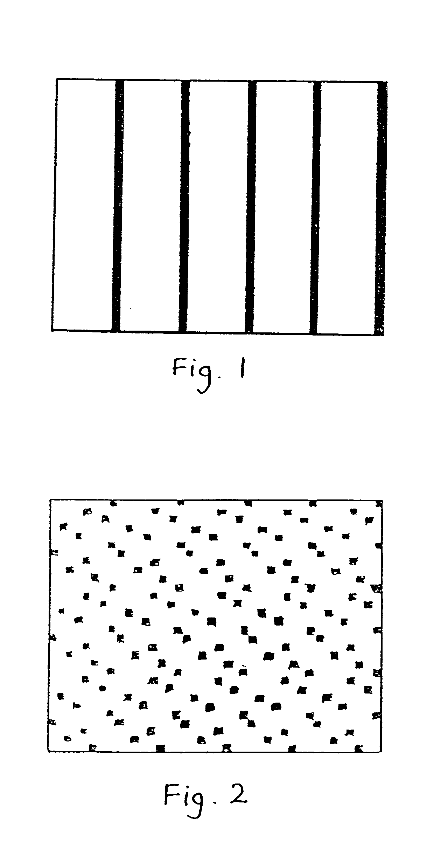

(57) In a pulse generating circuit each output pulse is produced in response to a counter counting a predetermined number of clock pulses. While the same number of pulses are counted each time, the intermediate count states used to produce consecutive output pulses are different. This reduces or eliminates coherent interference produced by the counter during counting which would otherwise give rise to visually intrusive banding (Fig. 1).

When used to generate timing pulses for a video imager, the circuit produces a randomly or pseudo-randomly scattered interference pattern (Fig. 2). While the actual amount of interference is unchanged, the distributed pattern is subjectively less objectionable than the visually intrusive regular banded interference pattern produced by a conventional counter which always uses the same count sequence.

Fig. 1

Fig. 2

EP 0 519 589 A2

This invention relates to pulse generating circuits, in particular, but not exclusively, pulse generating circuits which are used to generate synchronising waveforms in video cameras.

One of the major causes of fixed pattern appearing on the picture from a CCD imager (or other solid-state sensor) is feed-through from the binary counters which are used to generate various waveforms required to drive the imager. Present techniques to reduce such patterns usually rely on either reducing the coupling of counter noise from the logic to the video processing (for example, by improving decoupling of the power supply rails) or by choosing an alternative counting sequence such as a Gray Code, whereby fewer counter stages toggle simultaneously and hence cause less of a disturbance. However, improved decoupling involves extra components and expense, and even a Gray Code counter can still produce some feed-through which will manifest itself as vertical lines or stripes on the picture.

The reason for the fixed pattern appearing as vertical lines is that, whatever counting sequence is used, it repeats and feeds through identically on every horizontal line. These vertical lines are very noticeable to the human eye because of the brain's tendency to pick out edges and patterns from a scene. This effect is illustrated in figure 1, which shows the line structure produced by prior art circuits. The dark bars are a consequence of the relatively large current pulses which occur when for example, a counter chain assumes a particular state or changes between particular states. Depending on the type of counter used, this current pulse may occur either all the time that the counter is in that particular state, such as 111111, or during the time for which the counter is in transit between states, such as the change from 011111 to 100000.

The present invention seeks to ameliorate the disadvantages of the prior art.

According to the invention, a pulse generating circuit for generating a train of output pulses comprises counter means arranged to count a plurality of clock pulses, in which each output pulse is produced in response to the counter means countering a predetermined number of clock pulses, each output pulse being produced in response to the counter means stepping through a sequence of count states in response to said clock pulses, in which one output pulse is produced in response to a first sequence of count states and the next output pulse produced in response to a second sequence of count states different from the first sequence.

The sequences may be such that, considering each sequence as a time frame divided into a plurality of time slots, the count state of the first sequence during at least one time slot of the first time frame is different from the count state of the second sequence during the corresponding time slot of the second time frame.

Such an arrangement ensures that, when interference is produced as a result of a counter chain changing from one particular state to another particular state, such a change of state occurs at a different portion in adjacent time slots. This reduces or eliminates correlation between interference in consecutive time frames.

Arrangements in accordance with the invention may be useful in any application in which it is desirable to reduce the level of coherent noise arising from changes in state of counter chains or the like, and in which replacing coherent noise by substantially incoherent noise is an acceptable alternative to eliminating the noise. The output pulses may be regularly spaced; however, it would also be possible to produce pulses with different spacings between consecutive pulses should a particular application require it.

A circuit in accordance with the invention may be used to generate timing signals for a solid-state imager, each time frame corresponding to the line period of a video raster, the active line period corresponding to time slots for which the count states of the first and second time frames are different. The active line period need not be exactly co-terminous with the duration of the last-mentioned time slots. The active line period could be shorter than or equal to that duration. It could also be somewhat longer if the imager were used in conjunction with an overscanned monitor, or if counter states associated with time slots adjacent the edges of the active line period did not in fact give rise to objectionable interference.

The interference pattern on the video image produced by a circuit in accordance with the invention is subjectively less noticeable than interference produced by prior art circuits. This is because in accordance with the invention the counter used to generate the synchronising pulses counts through a different sequence during each line period. This has the effect of breaking up the line pattern of the prior art and makes interference appear more like random noise to which the eye is less sensitive. It is applicable in both interlaced and non-interlaced scanning arrangements.

The pattern may be a fixed pattern which does not change from frame to frame. Alternatively the patterns on consecutive frames may be different. This makes the pattern simulate the effect of random noise.

Pulses may be produced by setting the counter to a first count value, and detecting when the counter has attained a second count value, the second count value differing from the first count value by a predetermined amount.

The counter may comprise a memory which stores at least one sequence of count states.

Each count sequence may comprise a respective first and a respective second portion, the respective first portions being identical, the respective second portions of consecutive sequences being different from each other.

When used with an imager, the active line period may correspond to the second portion, the first portion corresponding to the line blanking period. Interference has no effect on the imager during the line blanking period, and so it does not matter if the respective first portions of each sequence are identical.

The respective second portions may comprise random or pseudo-random sequences.

The circuit may comprise a decoder for detecting the presence of a first portion and producing an output pulse in response to the detection of a first portion.

The circuit may comprise a counter to cyclically repeat the count sequences over a predetermined number of output pulses. For example, the sequence could repeat over a single frame of a video image, or a plurality of such frames.

The count sequences may be selected in a random or pseudo-random manner.

The means for storing sequences of count states may comprise a digital memory, such as a ROM, PROM, EPROM, EEPROM, EAROM or a RAM, or a shift register-type memory such as a CCD.

Each count state stored in the memory may comprise the address for the next count state in the sequence.

The circuit may be employed to generate line synchronisation pulses, or pulses at line rate for an imager, and/or frame synchronisation pulses or pulses at frame rate for an imager, such as a CCD imager.

The imager may be CCD imager. The circuit may be employed in a video camera.

Embodiments of the invention will now be described by way of non-limiting example only with reference to the drawings in which:

Figure 1 shows the effect of interference on a video image produced by a prior art circuit;

Figure 2 shows the effect of interference produced by a circuit in accordance with the invention;

Figure 3 shows a first embodiment of a circuit in accordance with the invention for generating a synchronising signal for a CCD imager;

Figure 4 shows a timing diagram for explaining the operation of the circuit of figure 3;

Figure 5 shows a second embodiment of a circuit in accordance with the invention; and

Figure 6 shows a timing diagram for explaining the operation of the circuit of figure 5.

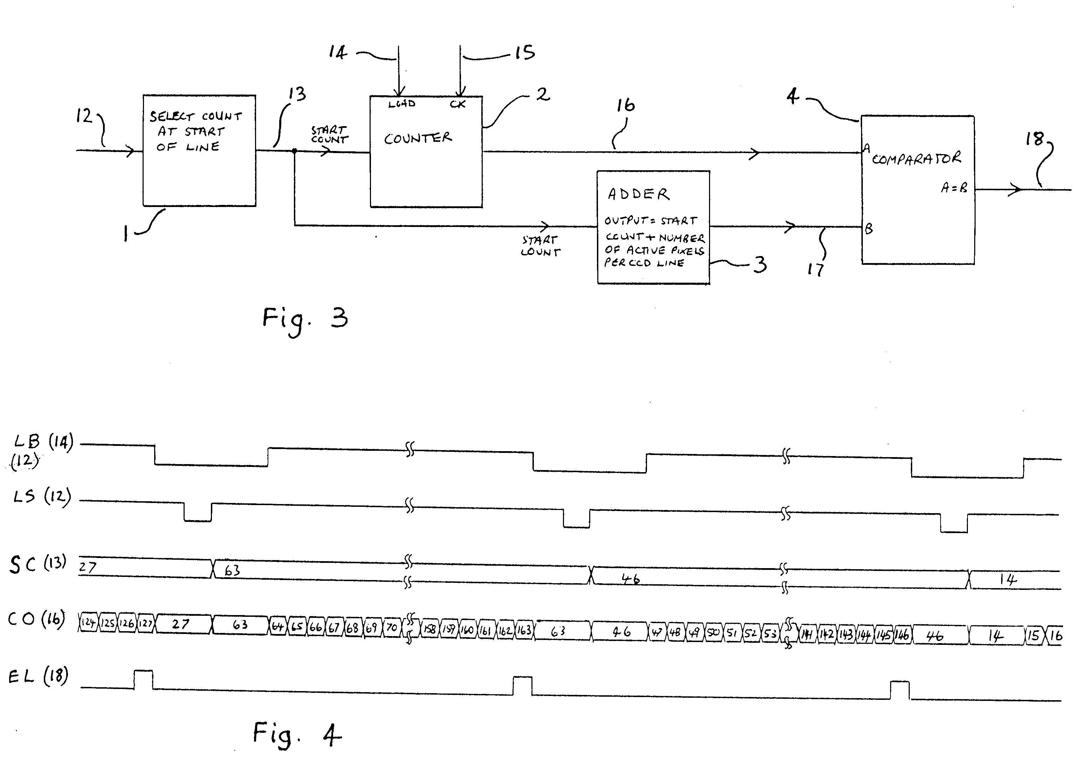

In Figure 3 line synchronisation pulses on input line 12 are applied to the input of count select circuit 1. On receipt of a line synch pulse, circuit 1 outputs a first binary number on line 13. This number is applied to a counter 2 and an adder 3. Line blanking signals on line 14 and pixel-rate clock signals on line 15 are applied to the counter 2. The line blanking signal inhibits operation of the counter while it is present. The pixel-rate clock increments the counter by one count for each clock pulse when the line blanking pulse is absent. The counter produces an output count in the form of a binary number on line 16. Adder 3 adds the first binary number to a second number which in the present embodiment is built into the adder 3. The numbers on lines 16 and 17 are applied to inputs A and B respectively of comparator 4. Comparator 4 produces an output when the numbers on its inputs A and B are equal.

Operation of the circuit of figure 3 will now be described with reference to the waveform diagram of figure 4.

When the circuit 1 receives a line synch pulse LS, it outputs a first binary number. The sequence of first binary numbers is represented by SC in figure 4. The number may be generated at random, or may be the next number in a predetermined sequence, which sequence may be regular or pseudo-random. The adder adds this number to the second number, outputs the resulting sum at its output on line 17 and applies it to input B of the comparator 4. The first number is also applied to the counter, and appears at its output. As soon as the line blanking pulse is removed, the counter increments its count by one for each clock pulse received. After a number of clock pulses equal to the second number, the inputs on inputs A and B of comparator 4 are the same, and the comparator produces an output pulse EL. Pulse EL indicates that the end of the line has been reached. Pulse EL is then used to reset further circuitry, not shown, which generates the line blanking and line synch pulses. The process then repeats.

A value of 100 pixels per line has been assumed for purposes of illustration only. The second number of the adder 3 is therefore equal to 100. On receipt of the first line synch pulse, a count of 63 is produced by circuit 1. The adder adds this to 100 to produce an output number of 163, and this output number is applied to input B of the comparator. When the line blanking pulse releases the counter 2, the number on line 16 successively assumes the values 64, 65 etc. as indicated by line CO of figure 4. When the count reaches 163, the comparator indicates that the counter has counted the requisite number of pulses and produces its output pulse EL on line 18. The next cycle now starts. On receipt of the second line synch pulse LS, the output on line 13 of circuit 1 and line 16 of counter 2 both change from 63 to 46. The output of adder 3 changes from 163 to 146. Counter 2 now counts up from 46 until it reaches the value 146, when an end of line pulse EL is produced as before. It is seen that in both cases the counter 2 has counted 100 clock pulses, in the first case counting from 64 to 163, and in the second from 47 to 146. The counter has thus assumed different intermediate count states while counting and as a consequence the relative positions of current peaks occurring during the counting sequences change from line to line.

Thus the counters still produce high current pulses, and these current pulses still cause interference on the image:- however, by making the counters start from a different count value in adjacent lines, the pattern is shifted laterally from line to line, the amount of shift depending on the starting count of the counter.

Figure 2 shows the effect of this on the image. Note that the image areas represented by figures 1 and 2 both have the same amount of interference. However, whereas in figure 1 the interference is regular and produces visually-obtrusive banding, the scattered interference of figure 2 is much less obtrusive. In some applications a fixed pattern of the type shown in figure 2 may give acceptable results. However, it is preferable to make the pattern change from frame to frame. In this way the persistence of the display and/or the eye of the viewer will tend to integrate the noise and further reduce the visual effect of counter-induced interference. This can be done by ensuring that the circuit 2 produces a suitable sequence of counts, regular, pseudo-random, or truly random according to requirements.

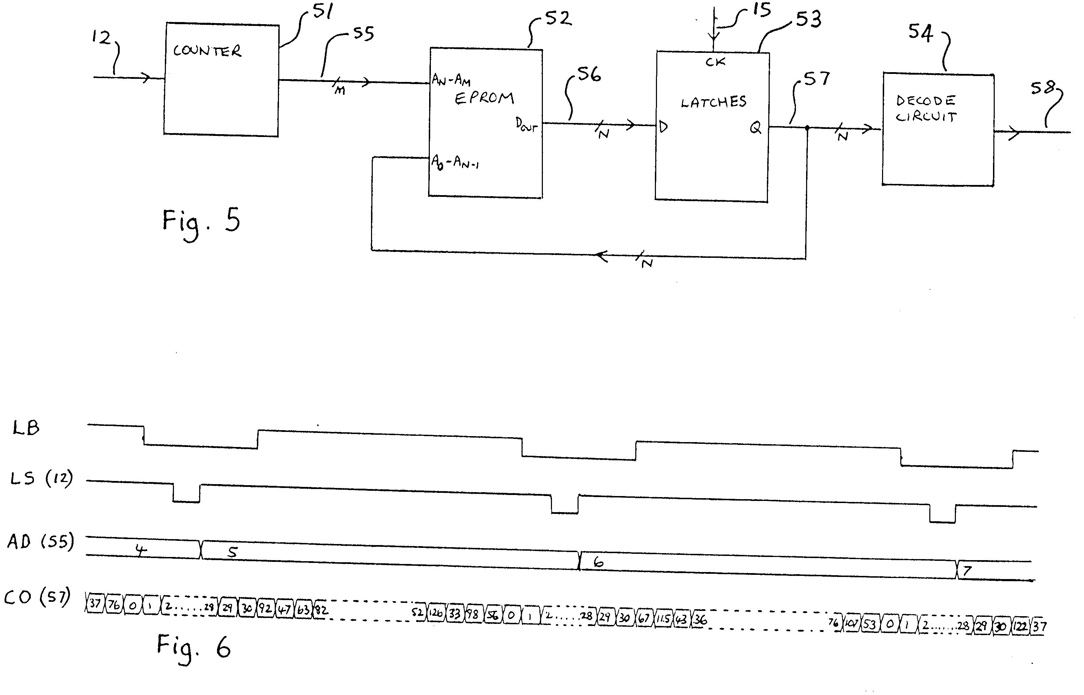

A second embodiment of the invention will now be described with reference to figures 5 and 6. In figure 6 the bracketted numbers denote the circuit nodes at which the respective waveforms appear. LB is the line blanking signal, LS the line synch waveform, AD the selected count sequence address, CO the sequence of count values appearing at the Q outputs of latches 53.

On receipt of a line synch pulse on line 12, counter 51 generates an M-bit count sequence number on line 55. This number is applied to address inputs $A_N$ to $A_M$ of a memory 52 which in the present embodiment is an EPROM. The EPROM 52 is programmed with a number of sequences of N-bit count numbers which are output on N-bit output bus 56. The N-bit bus 56 is connected to the respective D inputs of N D-type latches 53. The latches 53 are supplied with clock pulses at pixel rate by clock lines 15. On receipt of a clock pulse, the inputs at the respective D inputs are transferred to their respective Q outputs to produce an N-bit number on N-bit output bus 57. Bus 57 is connected to address inputs $A_0$ and $A_{N-1}$ of EPROM 52. Bus 57 is also connected to a decoder circuit 54. Decoder 54 produces various line rate signals on output bus 58 in response to the appearance of appropriate signals on bus 57.

N is the number of bits required for the full count length required, and M is the number of bits required to specify all available count sequences stored inside the EPROM. EPROM 52 is programmed such that, for any particular address value, the resulting N-bit output on line 57 represents the address of the next required number in the sequence, and therefore the latched D outputs of 53 will continuously count through the sequence. EPROM 52 and D-type latches 53 together form a counter which counts at pixel rate. By providing the additional address inputs $A_N$ to $A_M$, a plurality of different count sequences can be stored. Any of these sequences can be selected at will by applying appropriate address signals to inputs $A_N$ to $A_M$.

The sequences stored in EPROM 52 have a common portion which is identical for all sequences, this common portion being used by the decoder circuit 54 to generate its output waveforms. The common portion is represented by counts 0 to 30 of line CO of figure 6, and in the present embodiment may be considered to consist of two parts, a header portion finishing with count value 30, and a trailer portion starting with the count value 0. The portion intermediate the header and trailer portions substantially corresponds with the active line period and is different for consecutive lines. In the present embodiment, count value 0, which is the first clock period of the common period, is the last clock period of the active line period. Count value 0 corresponds with the pixel at the edge of the image. Thus, even if it did give rise to banding, it would have minimal visual effect. When viewed on an overscanned monitor it would be invisible and would therefore not affect the displayed image.

In the present non-limiting example, the full line period is 130 pixel periods, and the line blanking period is 30 pixel periods. The pixel rate clock 15 causes the latched outputs 57 to count from 0 to 30 in standard numerical order, the required line rate pulses being decoded during this time. As shown, line blanking pulses LB are generated during counts 1 to 30 of the common portion. Other line rate pulses may be generated as required. The line rate pulses produced by decode circuit 54 may be generated by any of the conventional techniques known to those skilled in the art, and will not be described further. The intermediate portion can be any sequence of numbers, but in the present embodiment does not include numbers in the range 0 to 30. Thus the decode logic will only respond to the common portion and will not respond to the intermediate portion.

On receipt of a line synch pulse LS on line 12, counter 51 outputs the next count sequence address. On figure 6 the first line synch pulse causes counter 51 to select sequence number 5.

During the line blanking period (LB low) the line synch pulse LS causes a new start line count to be selected. In figure 5, the first LS pulse selects count sequence address 5. This value is loaded into the counter until receipt of the following line synch pulse during the following line blanking period. The count on line 57 continues counting up to 30, this portion being the same for all sequences, and the decoder 54 continues to produce its output waveforms. After count 30, the line blanking pulse LB terminates, and EPROM 52 outputs a sequence of number 92, 47, 63, ... 33, 98, 56. Count value 56 is the 129th number output and is followed by number 0. This is the last value of the active line period and is followed one pixel clock period later by the next line blanking pulse LB. The count value continues to increment by one for each clock pulse, taking the values 1, 2, 3, etc. The appearance of the second line synch pulse LS causes the counter 51 to select count sequence 6. The first part of this sequence continues where the end of the previous sequence left off, and the count completes its count up to 30. The line blanking pulse terminates, and the count continues after 30 with values 67, 115, 43, ... 76, 107, 53, 0, 1, 2, 3, etc. as in the previous line period. The decoder circuit detects the values 0, 1, 2 etc. and produces output waveform accordingly as before.

As the intermediate count values are different in the two adjacent lines, interference produced by the counting process will not give rise to regular banding on the image.

A number of modifications are possible within the scope of the invention. For example, the common period may be equal to or longer or shorter than the line blanking period. Where the common period is longer than line blanking period it is only necessary that these states of the common period which occur at times fully within the active line portion are such as to give rise to substantially no visually intrusive effect on the display. The memory 52 need not be an EPROM, but may be any other type of read-only memory, or may be random-access memory. A random or pseudo-random number generating means be substituted for counter 51.

In a further modification, the different sequences need not have a common portion. In this case, knowledge of which count sequence was in use would have to be communicated to the decoder so that the decoder would know what count values to look for. While this would substantially eliminate correlated interference it would considerably complicate the decoder logic.

In a yet further modification, the sequences could include further sequences which could be used to generate frame synchronising pulses. A suitably modified decoder would be required to decode such further sequences.

While the invention has been described in use with a CCD imager, it would be equally usable with other types of imager. It would also be of use in any other applications utilising counters where a regular pattern of interference was undesirable, but distributed, random, or random-like interference was acceptable.

## Claims

1. A pulse generating circuit for generating a train of output pulses, the circuit comprising counter means (2; 52, 53) arranged to count a plurality of clock pulses (15), in which each output pulse (18, 58) is produced in response to the counter means counting a predetermined number of clock pulses, each output pulse (18, 58) being produced in response to the counter means stepping through a sequence of count states (CO) in response to said clock pulses, characterised in that one output pulse (18; 58) is produced in response to a first sequence of count states (CO: 63-163; 92-56) and the next output pulse (18; 58) is produced in response to a second sequence of count states (CO: 46-146; 67-53) different from the first sequence.

2. A pulse generating circuit as claimed in claim 1, in which the first and second sequences (CO) define respective first and second time frames, each time frame being divided into a plurality of time slots such that the count state (CO) of the first sequence during a time slot of the first time frame ( 64, 65, 66 ...; 92, 47, 63 ...) is different from the count state (CO) of the second sequence during the corresponding time slot of the second time frame (47, 48, 49 ...; 67, 115, 43 ...).

3. A pulse generating circuit as claimed in claim 2, in which each time frame corresponds to the line period of a video raster and the active line period of each line corresponds to time slots (92 - 56, 67 - 53, Fig. 6) for which the count states of the first and second time frames are different.

4. A circuit as claimed in any preceding claim, in which the output pulses (LS) are regularly spaced.

5. A circuit as claimed in any preceding claim, in which the counter means comprises a counter (2), the circuit further comprising means (1) to set the counter to a first count value (13), and means (3, 4) to detect when the counter has attained a second count value, the second count differing from the first count value by a predetermined amount.

6. A circuit as claimed in claim 5, in which the means to detect comprises an adder (3) and a comparator (4), in which the adder (3) adds the predetermined amount to the first count value to produce the second count value, and the comparator (4) detects when the counter has attained the second count value.

7. A circuit as claimed in claim 5 or 6, in which the counter (2) comprises control input means (LOAD) such that the counter is only enabled to count when an enable signal (14) is applied to the control input means.

8. A circuit as claimed in claim 7, in which the counter (2) increments its count by 1 for each clock pulse (15) counted.

9. A circuit as claimed in any of claims 5 to 8, in which the predetermined amount is the same for each pulse interval.

10. A circuit as claimed in any preceding claim, in which the counter means (52, 53) comprises means (52) for storing at least one sequence of count states.

11. A circuit as claimed in claim 10, comprising means (51) for selecting a sequence from the at least one sequence of count states.

12. A circuit as claimed in any preceding claim, in which each sequence of count states (CO, Fig 6) comprises a respective first and a respective second portion, the respective first portions being identical, and the respective second portions (92 - 56, 67 - 53) being different from each other.

13. A circuit as claimed in claim 12, in which the respective second portions (92 - 56, 67 - 53) comprise random or pseudo-random sequences.

14. A circuit as claimed in any preceding claim, comprising means (1, 51) to cyclically repeat the count sequences over a predetermined number of output pulses.

15. A circuit as claimed in any preceding claim, comprising means (1; 51) for selecting the count sequences in a random or pseudo-random manner.

16. A circuit as claimed in any of claims 10 to 15, in which the means for storing at least one sequence of count states comprises a digital memory means (52).

17. A circuit as claimed in claim 16, in which each count state (CO, Fig. 6) comprises an address for the next count state in the sequence.

18. A circuit as claimed in claim 17, in which the count state of the output (56) of the memory (52) is applied to the input of clocked latch means (53), the output (57) of the clocked latch means is applied to address inputs ($A_0$-$A_{n-1}$) of the memory, the arrangement being such that, on receipt of a clock pulse (15), the latch (53) transfers the count state of the output (56) of the memory to the said address inputs ($A_0$-$A_{n-1}$), thereby causing the next count state to appear at the output (56) of the memory (52).

19. A circuit as claimed in any preceding claim, in which the circuit generates (line) synchronisation pulses (EL, 18, 58) for an imager.

20. A video camera comprising a circuit as claimed in any preceding claim.

Fig. 1

Fig. 2

EP 0 519 589 A2

12 → | SELECT COUNT AT START OF LINE | (1)

13 START COUNT

14 15 → LOAD CK | COUNTER | (2)

16

| ADDER
OUTPUT = START COUNT + NUMBER OF ACTIVE PIXELS PER CCD LINE | (3)

START COUNT

17

4 | COMPARATOR  A  B  A = B | → 18

**Fig. 3**

LB (14)
(12)

LS (12)

SC (13): 27 | 63 | 46 | 14

CO (16): 124 125 126 127 | 27 | 63 | 64 65 66 67 68 69 70 | 158 159 160 161 162 163 | 63 | 46 | 47 48 49 50 51 52 53 | 141 142 143 144 145 146 | 46 | 14 | 15 16

EL (18)

**Fig. 4**

Fig. 5

COUNTER $\boxed{51}$ — $S5$ — $/m$ → $A_N-A_M$ EPROM $\boxed{52}$ $D_{OUT}$ — $S6$ — $/N$ → D LATCHES $\boxed{53}$ $CK$ $\boxed{15}$ Q — $S7$ — $/N$ → DECODE CIRCUIT $\boxed{54}$ → $58$

$12$ →

$A_0-A_{N-1}$

$/N$

Fig. 5

Fig. 6

LB

LS (12)

AD (55)    4    5    6    7

CO (57)  37 76 0 1 2 ... 28 29 30 92 47 63 82    52 126 33 98 56 0 1 2 ... 28 29 30 67 115 63 36    76 107 53 0 1 2 ... 28 29 30 122 37

Fig. 6

EP 0 519 589 A2